# EUROPÄISCHE PATENTANMELDUNG

(11) **EP 0 860 394 A2**
(43) Veröffentlichungstag der Anmeldung: **26.08.1998**
(21) Anmeldenummer: 98250054.8
(22) Anmeldetag: 17.02.1998
(51) Int. Cl.: B66C 7/04

(54) **Aufhängung einer Schiene, insbesondere einer nach unten offenen hohlprofilförmigen Schiene**

(30) Priorität: 25.02.1997 DE 19708747
(71) Anmelder: MANNESMANN Aktiengesellschaft, 40213 Düsseldorf (DE)
(72) Erfinder: Becker, Klaus, Dr.-Ing., 58300 Wetter (DE); Ostholt, Rüdiger, 58300 Wetter (DE); Legewie, Guido, Dr.-Ing., 44627 Herne (DE)
(74) Vertreter: Presting, Hans-Joachim, Dipl.-Ing.

(57) **Zusammenfassung**

Die Erfindung betrifft eine Vorrichtung zum Aufhängen einer Schiene, insbesondere einer nach unten offenen hohlprofilförmigen Schiene, an einem Tragwerk über ein an dem Tragwerk und an der Schiene befestigtes Zugelement.

Erfindungsgemäß ist vorgesehen, daß mindestens ein vom Zugelement (4) auf Vorspannung gehaltenes Zusatzelement (9) zur Übertragung von Druckkräften zwischen der Schiene (1) und dem Tragwerk (6) vorgesehen ist.

## Beschreibung

Die Erfindung betrifft eine Aufhängung einer Schiene, insbesondere einer nach unten offenen hohlprofilförmigen Schiene mit einem seitlich herauskragenden Ausleger, gemäß dem Oberbegriff des Anspruchs 1.

Aus dem Prospekt "Kranbaukasten KBK" der Mannesmann Demag Fördertechnik AG ist eine nach unten offene hohlprofilförmige Schiene einer Hängebahn bekannt, in deren Längsrichtung eine Hebevorrichtung mittels Fahrwerken schienenverfahrbar ist. Zum Befestigen einer Last ist am Fahrwerk jeweils ein unten aus der Schiene herausragendes Anschlußelement befestigt. Die Schiene ist dabei pendelnd, d.h. verschwenkbar, an einem Tragwerk oder einem Querträger mittels vertikal angeordneten länglichen Trägern aufgehängt, wobei die unteren Enden des Trägers an der Schiene und die oberen Enden an dem Tragwerk oder dem Querträger befestigt sind. Die pendelnde Aufhängung stellt sicher, daß sich die Hängebahn bei Belastung selbsttätig in den Gleichgewichtszustand bringt. Der Gleichgewichtszustand ist der Zustand, bei dem an den Schienen keine horizontalen Kräfte mehr und nur nach unten gerichtete vertikale Kräfte wirksam sind. Die Träger werden also nur vertikal nach unten belastet. Deshalb erfolgt die Befestigung des Trägers an der Schiene und am Tragwerk jeweils so, daß der Träger an den Enden mit Kugelköpfen versehen ist, die in komplementäre Kugelpfannen an der Schiene bzw. am Tragwerk eingehängt sind, so daß die einzelnen Elemente gegeneinander verschwenkbar sind. Das ist bei diesem Kran eine notwendige Voraussetzung für dessen einwandfreie Funktion.

Für einen Hängekran mit einem seitlich herauskragenden Ausleger ist ein Kran mit der oben beschriebenen Aufhängung nicht geeignet, da in diesem Falle nach oben gerichtete vertikale Kräfte auftreten, die an keiner Stelle von der Aufhängung aufgenommen werden können, so daß bei einem derartigen Kran große Absenkungen der Last auftreten würden. Das ist aber nur in einem sehr geringen Toleranzbereich zulässig, da vertikale Absenkungen der Last beim Verschwenken großer Lasten ein gleichzeitiges Anheben der Last durch die Bedienperson erfordern, was je nach Größe der Last nur mit einem großen Kraftaufwand oder gar nicht möglich ist. Dabei neigt die Last bei einer solchen Aufhängung dazu, den Zustand der geringsten potentiellen Energie einzunehmen, d. h. die Last bewegt sich in der Regel selbsttätig vom Zustand höherer potentieller Energie zum Zustand geringerer potentieller Energie, also in seine tiefste örtliche Lage.

Die Aufgabe der Erfindung ist es, eine pendelnde Aufhängung einer Schiene zu schaffen, insbesondere einer nach unten offenen hohlprofilförmige Schiene mit einem seitlich herauskragenden Ausleger, die alle vertikalen Kräfte aufnehmen kann und damit ein Absenken der Last während ihrer Verschwenkung um eine vertikale Achse nahezu verhindert.

Die Lösung dieser Aufgabe erfolgt erfindungsgemäß durch die im Patentanspruch 1 angegebenen Merkmale. Durch die kennzeichnenden Merkmale der Unteransprüche 2 bis 14 ist die Aufhängung in vorteilhafterweise weiter ausgestaltet.

Die Erfindung sieht vor, daß mindestens ein vom Zugelement auf Vorspannung gehaltenes Zusatzelement zur Übertragung von Druckkräften zwischen der Schiene und dem Tragwerk vorgesehen ist. Eine derartig ausgebildete Aufhängung stellt sicher, daß die Last auch bei einem seitlich herauskragenden Ausleger keine Absenkung erfährt. Die auftretenden vertikalen Kraftkomponenten, die im wesentlichen durch die Last erzeugt werden, werden von den mittels Zugelementen auf Vorspannung gehaltenen Zusatzelementen sicher aufgenommen.

Um eine störungsfreie Funktionsweise zu erreichen, wird vorgeschlagen, daß der Betrag der Vorspannungen an den Zusatzelementen jeweils eines Zugelements mindestens der größten aus Kippmomenten der Schiene resultierenden, entgegen der Zugkraft gerichteten Vertikalkraft entspricht. Die größten Kippmomente treten bei der größten zugelassenen Last, also der Nennlast, auf.

Mit der Erfindung wird vorgeschlagen, daß das vorspannbare Zusatzelement mindestens eine stauchbare Feder ist, die durch das Zugelement im gestauchten Zustand gehalten ist.

Die Feder ist zweckmäßigerweise als Schraubenfeder ausgebildet.

Zum besseren Befestigen des Zusatzelementes ist der Träger mit länglichen Abschnitten ausgebildet.

Eine einfache Aufhängung der Schiene wird dadurch erzielt, daß der Träger an dem Tragwerk und an der Schiene gelenkig eingehängt ist.

Eine einfache selbstzentrierende Einhängung des Trägers wird dadurch erzielt, daß die als Kugelkopf ausgebildeten Enden des Trägers in am Tragwerk und an der Schiene befestigten Kugelkopfpfannen eingehängt sind.

Mit geringstem Aufwand läßt sich die Übertragung von Druckkräften zwischen der Schiene und dem Tragwerk verwirklichen, wenn die Feder an der Schiene und am Tragwerk abgestützt ist.

Eine Verbesserung der Einstellung der Vorspannung wird dadurch erzielt, daß eine erste an der Schiene und am Träger und eine zweite am Träger und am Tragwerk abgestützte Feder als Zusatzelement vorgesehen sind.

Eine sehr robuste Ausführung der Erfindung erhält man, indem der Träger innerhalb der Feder angeordnet ist.

Eine Erhöhung der Zuverlässigkeit erhält man dadurch, daß das Zusatzelement aus mindestens zwei, an den Enden durch ein Gelenk miteinander verbundene Hebel gebildet ist, die im Bereich der dem Gelenk abgewandten Enden an der Schiene und an dem Tragwerk befestigt sind.

Vorteilhafterweise sind die Hebel aus winklig miteinander verbundenen Teilen gebildet, wobei deren dem Gelenk abgewandten Teile parallel zueinander verlaufen. Auf diese Weise ist es möglich, die Feder einfach zwischen den parallelen Teilen der Hebel anzuordnen und auf Vorspannung zu halten.

Eine kompakte Ausführung des Zusatzelementes erhält man, wenn man die Feder zwischen dem Gelenk und dem Zugelement anordnet.

Eine Verbesserung der Vorspannungseinstellung und der Überprüfbarkeit des Vorhandenseins der Vorspannungseinstellung wird erzielt, wenn zwei ineinander greifende Paare von Hebeln als Zusatzelemente vorgesehen werden, wobei jeweils ein Hebel eines Paares an mindestens einem länglichen Abschnitt des Zugelementes befestigt ist, während der jeweils andere Hebel an dem Tragwerk bzw. an der Schiene befestigt ist.

Zwei Ausführungsbeispiele der Erfindung sind in der Zeichnung dargestellt und werden nachfolgend näher beschrieben. Es zeigen:
- Fig. 1: ein erstes Ausführungsbeispiel einer Aufhängung mit einem Paar von Hebeln als Zusatzelement und
- Fig. 2: ein zweites Ausführungsbeispiel mit eine ersten an der Schiene und am Träger und eine zweiten am Träger und am Tragwerk abgestützten Feder.

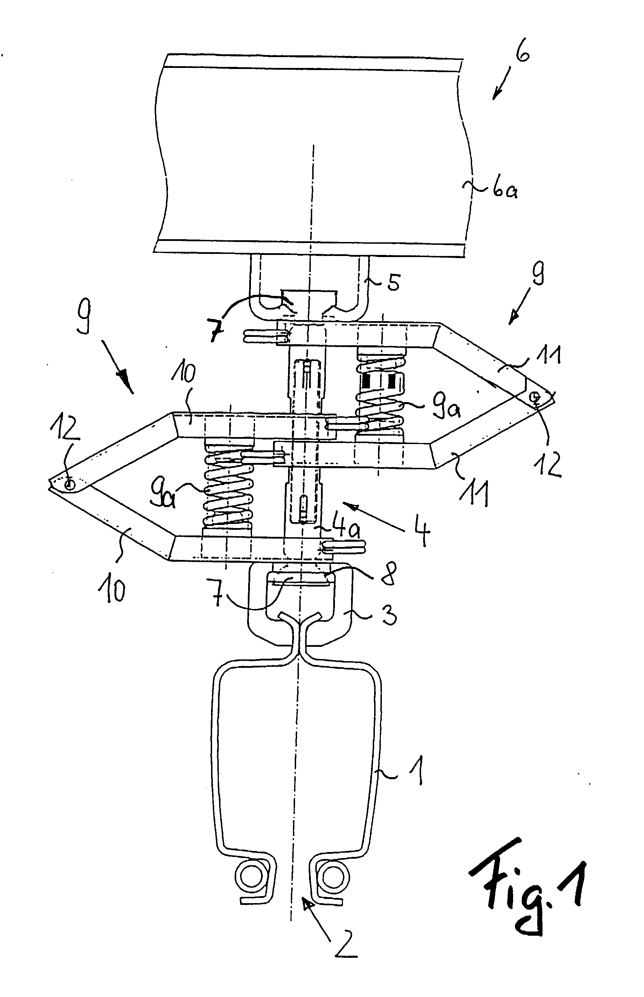

Fig. 1 zeigt ein erstes Ausführungsbeispiel, das insbesondere für einen Hängekran mit einem seitlich herauskragenden Ausleger geeignet ist; der Hängekran selbst ist in Fig. 1 nicht dargestellt. Zur Abstützung und Sicherstellung einer leichtgängigen Schienenverfahrbarkeit mittels Fahrwerken dient die in Fig. 1 im Querschnitt dargestellte Schiene 1. Die Schiene 1 ist hohlprofilförmig ausgebildet und nach unten hin offen, so daß an einem unten aus der Öffnung 2 der Schiene 1 herausragenden Anschlußelement des Fahrwerks eine Last befestigbar ist. Gegenüber der Öffnung 2 ist die Schiene 1 über ein klammerartiges Zwischenelement 3 an einem ersten Ende eines Zugelements 4 befestigt, das als länglicher Träger 4a ausgebildet ist. Wie Fig. 1 weiter erkennen läßt, ist das Zugelement 4 an seinem zweiten Ende über ein weiteres Zwischenelement 5 an einem Tragwerk 6 in Form eines horizontal angeordneten Stahlträgers 6a befestigt. Die Verbindungen des Zugelements 4 sind als Kugelkopf 7 ausgebildet, der jeweils in einer komplementären Kugelkopfpfanne 8 des jeweiligen Zwischenelements 3 bzw. 5 zur Abstützung eingehängt ist, so daß nach unten gerichtete Zugkräfte abgeleitet werden können und eine Selbstzentrierung der Aufhängung erzielt wird.

Am Zugelement 4 sind zusätzlich zwei vom Zugelement 4 auf Vorspannung gehaltene Zusatzelemente 9 zur Übertragung von Druckkräften zwischen der Schiene 1 und dem Tragwerk 6 vorgesehen, über die die Schiene 1 gegenüber dem Zugelement 4 und das Zugelement 4 gegenüber dem Tragwerk 6 abgestützt ist. Die Zusatzelemente 9 umfassen im Ausführungsbeispiel eine Feder 9a, die als Schraubenfeder ausgebildet und jeweils zwischen zwei Hebeln 10 bzw. 11 angeordnet ist. Die Hebel 10 bzw. 11 sind jeweils an den Enden durch ein Gelenk miteinander verbunden und im Bereich der dem Gelenk 12 abgewandten Enden an dem Zugelement 4 befestigt. Auf diese Weise bewirkt die Feder 9a eine Spreizkraft, die als Vorspannung durch das Zugelement 4 aufrechterhaltbar ist.

Selbstverständlich muß das Zusatzelement 9 nicht eine Feder 9a umfassen; genauso ist hier ein druckbeaufschlagter hydraulischer Zylinder und dergleichen verwendbar, der teleskopartig ausfahrbar ist und auf diese Weise eine Spreizkraft zwischen den Hebeln 10 bzw. 11 erzeugt.

Die Hebel 10 bzw. 11 sind aus winkelig miteinander verbundenen Teilen gebildet, wobei die an das Zugelement 4 angrenzenden Teile parallel zueinander verlaufen. Wie aus Fig. 1 ersichtlich, ist die Feder 9a parallel zum Zugelement 4 zwischen den parallel verlaufenden Teilen der Hebel 10 bzw. 11 und zwischen dem Gelenk 12 und dem Zugelement 4 angeordnet. Insgesamt sind im Ausführungsbeispiel am Zugelement 4 zwei Paare durch ein Gelenk 12 miteinander verbundener Hebel 10 bzw. 11 ineinandergreifend befestigt. Bei einem nicht durchgehend länglich ausgebildetem Zugelement 4 erfolgt die Befestigung der beiden Paare an einem dafür vorzusehenden länglichen Abschnitt des Zugelements 4; der Träger 4a sollte also zumindest einen länglichen Abschnitt aufweisen.

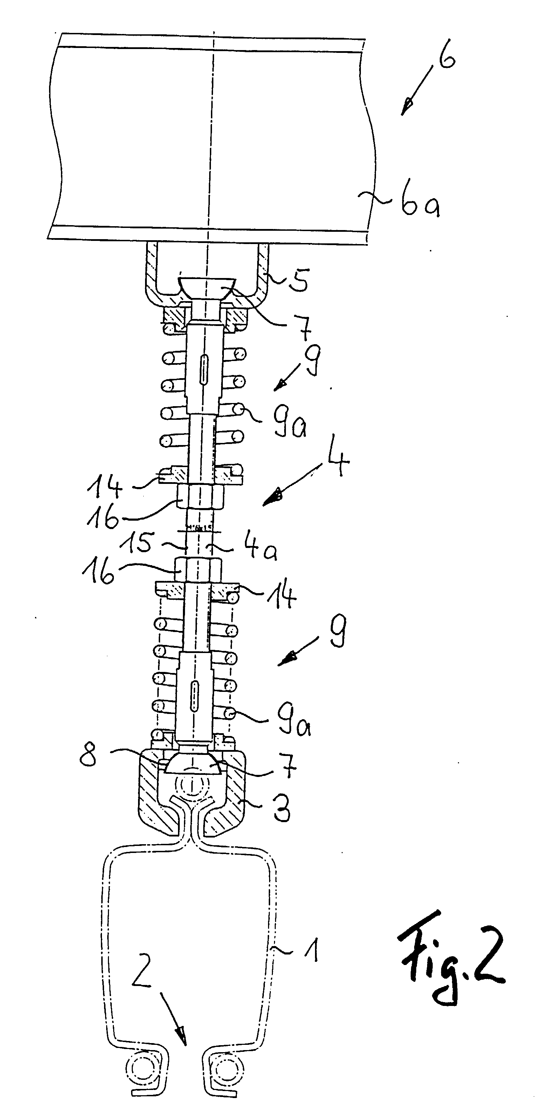

Fig. 2 zeigt eine alternative Ausführungsform der Erfindung, bei der das Zugelement 4 in Form des länglichen Trägers 4a innerhalb von zwei als Schraubenfedern ausgebildeten Federn 9a angeordnet sind. Die Federn 9a sind jeweils am Zugelement 4 abgestützt, wobei als Auflage jeweils ein auf den mit einem Außengewinde 15 versehenen Zugelement 4 aufgeschraubtes Auflageelement 14 vorgesehen ist, das durch eine Mutter 16 gekontert ist. Die den Auflageelementen 14 jeweils gegenüberliegenden Enden der Feder 9a stützen sich am Zwischenelement 3 bzw. 5 ab. Durch das Auflageelement 14 wird die Feder 9a im Ausführungsbeispiel zur Erzeugung der Streckkraft gestaucht und damit vom Zugelement 4 auf Vorspannung gehalten.

Selbstverständlich ist es in beiden Ausführungsformen auch möglich, die Schiene 1 gegenüber dem Zugelement 4 durch ein einziges Zusatzelement 9 abzustützen, also nur eine einzelne Feder 9a und bei der ersten Ausführungsform nur ein Paar von Hebeln 10 oder 11 zu verwenden.

Die Aufhängung ist derart ausgelegt, daß der Betrag der Vorspannungen am Zugelement mindestens der aus den Kippmomenten der Schiene resultierenden, entgegen der Zugkraft gerichteten Vertikalkraft entspricht, so daß alle nach oben gerichteten vertikalen Kraftkomponenten durch die Streckkraft kompensiert werden, solange diese in ihrer vektoriellen Summe die Streckkraft oder Vorspannung nicht überschreiten. Auf diese Weise wird bei pendelnder Aufhängung eine vertikale Verschiebung der Schiene 1 gegenüber dem Tragwerk 6 verhindert. Somit senkt sich die Last auch bei einem seitlich herauskragenden Ausleger beim Verschwenken des Auslegers mit der Last nicht ab, so daß eine einwandfreie Funktionsweise des Hängekrans sichergestellt ist.

### BEZUGSZEICHENLISTE:

1 Schiene
2 Öffnung
3 Zwischenelement
4 Zugelement
4a Träger
5 Zwischenelement
6 Tragwerk
7 Stahlträger
7a Kugelkopf
8 Kugelkopfpfanne
9 Zusatzelement
9a Feder
10 Hebel
11 Hebel
12 Gelenk
14 Auflageelement
15 Außengewinde
16 Mutter

## Patentansprüche

1. Vorrichtung zum Aufhängen einer Schiene, insbesondere einer nach unten offenen hohlprofilförmigen Schiene,
an einem Tragwerk über ein an dem Tragwerk und an der Schiene befestigtes Zugelement,
**dadurch gekennzeichnet**,
daß mindestens ein vom Zugelement (4) auf Vorspannung gehaltenes Zusatzelement (9) zur Übertragung von Druckkräften zwischen der Schiene (1) und dem Tragwerk (6) vorgesehen ist.

2. Vorrichtung nach Anspruch 1,
**dadurch gekennzeichnet**,
daß der Betrag der Vorspannungen an den Zusatzelementen (9) jeweils eines Zugelements (4) mindestens der größten aus Kippmomenten der Schiene (1) resultierenden, entgegen der Zugkraft gerichteten Vertikalkraft entspricht.

3. Vorrichtung nach einem der Ansprüche 1 oder 2,
**dadurch gekennzeichnet**,
daß das Zusatzelement (9) mindestens eine stauchbare Feder (9a) umfaßt, die durch das Zugelement (4) im gestauchten Zustand gehalten ist.

4. Vorrichtung nach Anspruch 3,
**dadurch gekennzeichnet**,
daß die Feder (9a) als Schraubenfeder ausgebildet ist.

5. Vorrichtung nach einem der Ansprüche 1 bis 4,
**dadurch gekennzeichnet**,
daß das Zugelement (4) als ein längliche Abschnitte aufweisender Träger (4a) ausgebildet ist.

6. Vorrichtung nach einem der Ansprüche 1 bis 5,
**dadurch gekennzeichnet**,
daß der Träger (4a) an dem Tragwerk (6) und an der Schiene (1) gelenkig eingehängt ist.

7. Vorrichtung nach einem der Ansprüche 1 bis 6,
**dadurch gekennzeichnet**,
daß als Kugelkopf (7a) ausgebildeten Enden des Trägers (4a) in einer am Tragwerk (6) und einer an der Schiene (1) befestigten Kugelkopfpfanne (8) eingehängt sind.

8. Vorrichtung nach einem der Ansprüche 1 bis 7,
**dadurch gekennzeichnet**,
daß die Feder (9a) an der Schiene (1) und am Tragwerk (6) abgestützt ist.

9. Vorrichtung nach einem der Ansprüche 1 bis 8,
**dadurch gekennzeichnet**,
daß eine erste an der Schiene (1) und am Träger (4a) und eine zweite am Träger (4a) und am Tragwerk (6) abgestützte Feder (9a) als Zusatzelemente (9) vorgesehen sind.

10. Vorrichtung nach einem der Ansprüche 1 bis 9,
**dadurch gekennzeichnet**,
daß der Träger (4a) innerhalb der Feder (9a) angeordnet ist.

11. Vorrichtung nach einem der Ansprüche 1 bis 7,
**dadurch gekennzeichnet**,
daß das Zusatzelement (9) aus mindestens zwei, an den Enden durch ein Gelenk (12) miteinander verbundene Hebel (10, 10; 11, 11) gebildet ist, die im Bereich der dem Gelenk (12) abgewandten Enden an der Schiene (1) und an dem Tragwerk (6) befestigt sind.

12. Vorrichtung nach Anspruch 11,
**dadurch gekennzeichnet**,
daß die Hebel (10 bzw. 11) aus winkelig miteinander verbundenen Teilen gebildet sind, deren dem Gelenk (12) abgewandte Teile parallel zueinander verlaufen.

13. Vorrichtung nach einem der Ansprüche 11 oder 12,
**dadurch gekennzeichnet**,
daß die Feder (9a) zwischen dem Gelenk (12) und dem Zugelement (4) angeordnet ist.

14. Vorrichtung nach einem der Ansprüche 11 bis 13,
**dadurch gekennzeichnet**,
daß zwei ineinandergreifende Paare von Hebeln (10, 10; 11, 11) als Zusatzelemente (9) vorgesehen sind, wobei jeweils ein Hebel (10, 11) eines Paares an mindestens einem länglichen Abschnitt des Zugelements (4) befestigt ist, während der jeweils andere Hebel (10, 11) an dem Tragwerk (6) bzw. an der Schiene (1) befestigt ist.
